(19) Europäisches Patentamt
European Patent Office
Office européen des brevets

(11) **EP 3 875 297 A1**

(12) **EUROPEAN PATENT APPLICATION**
published in accordance with Art. 153(4) EPC

(43) Date of publication:
**08.09.2021 Bulletin 2021/36**

(51) Int Cl.:
***B60K 7/00*** *(2006.01)* ***F16D 55/224*** *(2006.01)*
***F16D 65/02*** *(2006.01)*

(21) Application number: **19879173.3**

(22) Date of filing: **25.10.2019**

(86) International application number:
**PCT/JP2019/041923**

(87) International publication number:
**WO 2020/090660 (07.05.2020 Gazette 2020/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.11.2018 JP 2018206727**

(71) Applicant: **NTN Corporation**
**Osaka-shi, Osaka 550-0003 (JP)**

(72) Inventors:
• **SUGIURA, Saori**
  **Iwata-shi, Shizuoka 438-8510 (JP)**
• **TAMURA, Shiro**
  **Iwata-shi, Shizuoka 438-8510 (JP)**

(74) Representative: **Bockhorni & Brüntjen**
**Partnerschaft**
**Patentanwälte mbB**
**Elsenheimerstraße 49**
**80687 München (DE)**

(54) **COMBINED STRUCTURE OF IN-WHEEL MOTOR DRIVE DEVICE AND BRAKE CALIPER**

(57) A motor unit (21) of an in-wheel motor drive device (10) is offset from the axis (O) of a hub wheel. A brake caliper (40) is offset from the axis (O) so as not to overlap the motor unit (21) as viewed in the direction of the axis (O) and is attached and fixed to a casing serving as an outer shell of the in-wheel motor drive device (10) by attachment members (44, 45) at two positions separated in a circumferential direction about the axis (O). The attachment members (44, 45) are disposed in such a manner that a part of each attachment member (44, 45) overlaps the outer circumferential edge of a brake rotor (50) as viewed in the direction of the axis (O).

FIG. 3

EP 3 875 297 A1

## Description

Technical Field

The present invention relates to in-wheel motor drive devices that are disposed inside a wheel and drive the wheel, and more particularly to a brake device that slows down or stops the wheel.

Background Art

Structures described in Japanese Unexamined Patent Publication Nos. 2008-184110 (Patent Literature 1) and 2012-025291 (Patent Literature 2) are conventionally known as structures related to an in-wheel motor that is disposed inside a wheel and drives the wheel and a brake caliper that slows down or stops a rotating brake disc rotating with the wheel. In the structure described in Patent Literature 1, a motor, a first speed reducer, and a second speed reducer are attached to a knuckle, and a brake caliper is also attached to the knuckle. The attachment points between the knuckle and the brake caliper are located radially inward of the outer peripheral edge of a brake disc.

In the structure of Patent Literature 2, an in-wheel motor includes a cylindrical motor housing, and two bosses stand on a circular plate-like end face of the motor housing. A brake caliper is bolted to the bosses by screwing bolts into the bosses from the outer side (wheel side) in the lateral direction of a vehicle. The attachment points between a knuckle and the brake caliper are located radially outward of the outer peripheral edge of a disc rotor.

Citation List

Patent Literatures

   Patent Literature 1: Japanese Unexamined Patent Publication No. 2008-184110
   Patent Literature 2: Japanese Unexamined Patent Publication No. 2012-025291

Summary of Invention

Technical Problem

In the structure of Patent Literature 1, the knuckle extends in the vertical direction across the axis of the wheel, and the brake caliper is attached and fixed to the middle portion of the knuckle. The attachment points between the brake caliper and the knuckle are therefore located near the axis of the wheel. Accordingly, when slowing down or stopping the brake disc, an undesired load is applied to the attachment points in addition to the braking load. In this case, it is necessary to take measures regarding strength, such as making the attachment points thicker. It is therefore desired to reduce the undesired load other than the braking load.

In the structure of Patent Literature 2, since the brake caliper and the in-wheel motor are arranged in series in the axial direction, the outer diameter dimension of the in-wheel motor can be increased to a value close to the inner diameter of a road wheel. However, the total axial dimension of the in-wheel motor and the brake caliper is large. That is, it is necessary to dispose the in-wheel motor inward of the brake caliper in the lateral direction of the vehicle so that the in-wheel motor does not interfere with the brake caliper. The in-wheel motor therefore protrudes from the road wheel inward in the lateral direction of the vehicle.

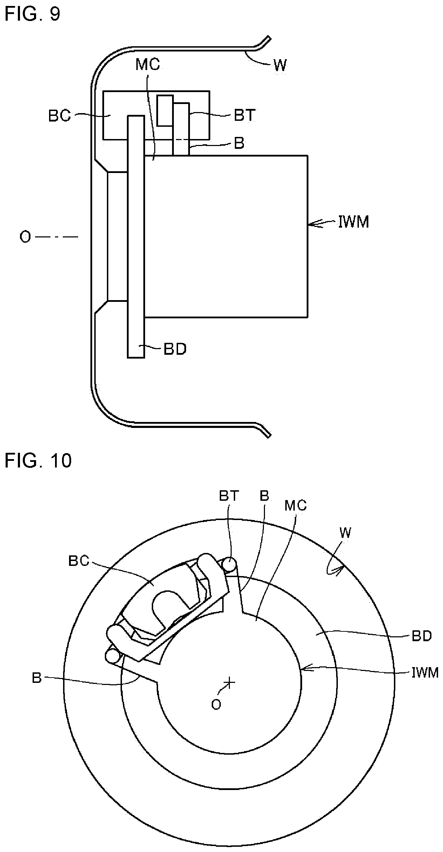

As in a reference example shown in FIG. 9, in order to reduce the total dimension of a brake caliper BC and an in-wheel motor IWM in the direction of the axis O, it is possible to use a layout in which the brake caliper BC and the in-wheel motor IWM overlap each other in the direction of an axis O as viewed from the outside in the radial direction of the in-wheel motor. However, if this layout is used, it is necessary to make the outer diameter dimension of the in-wheel motor IWM much smaller than the inner diameter of a road wheel in order to make space for the brake caliper BC. Moreover, as shown in FIG. 10, in the reference example, the brake caliper BC is attached and fixed to tip ends BT of bosses B, and the tip ends BT of the bosses B are located radially outward of the outer peripheral edge of a brake disc BD, as viewed in the direction of the axis O of the in-wheel motor. In this case, since the tip ends BT of the bosses B are located away from a motor casing MC outward in the radial direction, the bosses B extend in the radial direction and the strength may not be great enough.

In view of the above circumstances, it is an object of the present invention to provide a structure for implementing, for an in-wheel motor and a brake caliper that are disposed in a limited space, namely in an inner space region of a road wheel, a layout improved and more advantageous in terms of strength as compared to the conventional examples.

Solution to Problem

In order to achieve the object, a coupled structure of an in-wheel motor drive device and a brake caliper according to the present invention is a coupled structure of an in-wheel motor drive device and a brake caliper in which the in-wheel motor drive device, a brake rotor, and the brake caliper are coupled together, the in-wheel motor drive device including: a wheel hub bearing unit that includes a hub ring, a stationary ring, and a plurality of rolling elements arranged in annular clearance between the hub ring and the stationary ring and that rotatably supports the hub ring; a motor unit that is offset from an axis of the hub ring and that is configured to drive the hub ring; and a speed reduction unit configured to reduce a speed of output rotation of the motor unit and transmit the resultant output rotation to the hub ring, the brake rotor being configured to rotate with the hub ring, and the brake caliper being configured to slow down or stop the brake rotor. The brake rotor is coaxially coupled to the hub ring. The brake caliper is offset from the axis of the hub ring so as not to overlap the motor unit as viewed in an axial direction of the hub ring and is attached and fixed to a casing serving as an outer shell of the in-wheel motor drive device by attachment members at two positions separated in a circumferential direction about the axis of the hub ring. The attachment members are disposed in such a manner that a part of each attachment member overlaps an outer circumferential edge of the brake rotor as viewed in the axial direction of the hub ring.

According to the present invention, since the attachment members that attach the brake caliper to the in-wheel motor drive device are located farther from the axis than in the conventional examples, an undesired load that acts on the attachment members can be eliminated or reduced, which is advantageous in terms of strength. Moreover, since the brake caliper and the motor unit are disposed at different positions in the circumferential direction about the axis of the hub ring, the in-wheel motor drive device and the brake caliper can be suitably disposed in a limited space, namely in an inner space region of a road wheel. The motor unit therefore does not excessively protrude from the inner space region of the road wheel, and the outer diameter of the motor part does not become significantly small. The speed reduction unit for drivingly coupling the wheel hub bearing unit and the motor unit whose axes are offset from each other is, e.g., a parallel shaft speed reducer. The attachment members need not necessarily provided at the two positions, and may be provided at three or more positions.

Although the structure of the brake caliper is not particularly limited, the brake caliper is, e.g., a floating brake caliper in which a movable caliper member is supported in a displaceable manner by a fixed caliper member, and the movable caliper member squeezes a disc-shaped brake rotor. In one aspect of the present invention, the brake caliper includes a fixed caliper member attached and fixed to the in-wheel motor drive device by the attachment members, two caliper slide pins supported by the fixed caliper member, and a movable caliper member that is displaceable along the two caliper slide pins and that is configured to slow down or stop the brake rotor. The attachment members at the two positions are located circumferentially outward of the two caliper slide pins in the circumferential direction about the axis of the hub ring. According to this aspect, the distance between the two positions where the attachment members are provided, namely a support span of the brake caliper, is greater than in the conventional examples, and the undesired load that acts on the attachment members can further be reduced. The number of caliper slide pins is not limited to two.

The brake caliper need only be attached and fixed to the in-wheel motor drive device, and may be attached and fixed to any part of the in-wheel motor drive device. In a preferred aspect of the present invention, the brake caliper is attached and fixed to a casing of the speed reduction unit out of the casing by the attachment members. According to this aspect, the brake caliper can be attached and fixed to the casing of the speed reduction unit that surrounds the axis of the hub ring and a rotating shaft of the motor unit. For example, a coupling seat or a bracket that is coupled to the attachment members may be provided on the casing of the speed reduction unit.

For example, the attachment members are, but not particularly limited to, bolts. In a more preferred aspect of the present invention, regarding the axis of the hub ring, the brake rotor is disposed on one side in an axial direction of the in-wheel motor drive device, and the attachment members are bolts extending through through holes of the casing from the other side in the axial direction and screwed into the fixed caliper member. According to this aspect, the bolts can be rotated from the other side in the axial direction of the in-wheel motor drive device where the brake rotor is not present. The brake caliper can thus be attached and detached by axial tightening while avoiding the brake rotor. The bolts extend in the axial direction.

In another aspect of the present invention, the attachment members are bolts screwed into the in-wheel motor drive device from an outer side in a radial direction about the axis of the hub ring. According to this aspect, the brake caliper can be attached and detached by radial tightening while avoiding the brake rotor. For example, the bolts extend parallel to a radius line and form a pair. Alternatively, the bolts extend along the radius line and arranged in a radial pattern.

Advantageous Effects of Invention

As described above, according to the present invention, a coupled structure is provided which is more advantageous in terms of strength and layout than the conventional examples. According to the present invention, an undesired load will not act on the attachment points between the brake caliper and the in-wheel motor drive device, which is advantageous in terms of strength. Moreover, a suitable layout is implemented for the brake caliper and the in-wheel motor drive device that are disposed in the limited space, namely in the inner space region of the road wheel. The motor unit does not excessively protrude from the inner space region of the road wheel, and the outer diameter of the motor unit does not become excessively small.

Brief Description of Drawings

[FIG. 1] FIG. 1 is a side view of an embodiment of the present invention.
[FIG. 2] FIG. 2 is a rear view of the embodiment.
[FIG. 3] FIG. 3 is a side view of the embodiment.
[FIG. 4] FIG. 4 schematically illustrates a load acting on the embodiment.
[FIG. 5] FIG. 5 is a side view of a modification of the embodiment.
[FIG. 6] FIG. 6 is a side view of another embodiment of the present invention.
[FIG. 7] FIG. 7 illustrates the another embodiment as viewed in the direction of arrow A in FIG. 6.
[FIG. 8] FIG. 8 is a side view of the another embodiment.
[FIG. 9] FIG. 9 schematically illustrates a reference example as viewed from the outside in the radial direction of an in-wheel motor.
[FIG. 10] FIG. 10 a schematic side view of the reference example as viewed in the axial direction of a hub ring.
[FIG. 11] FIG. 11 schematically illustrates a load acting on a comparative example.

Description of Embodiments

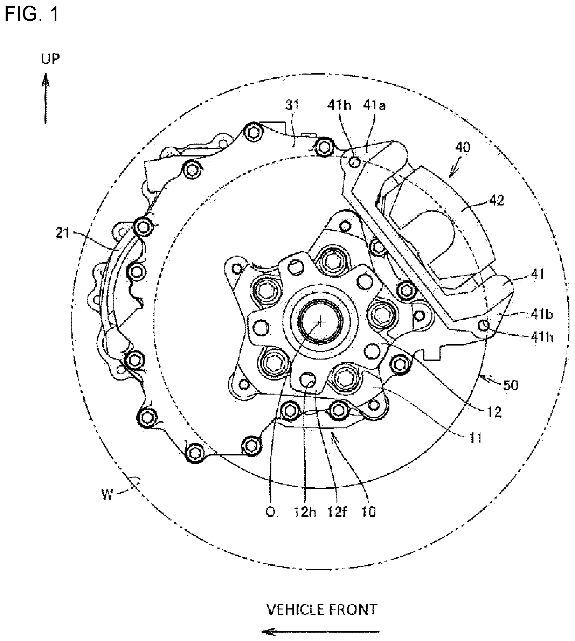

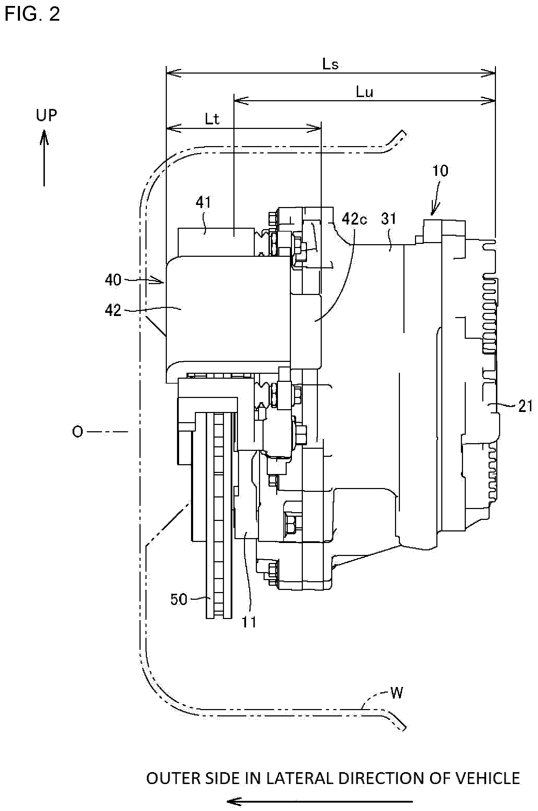

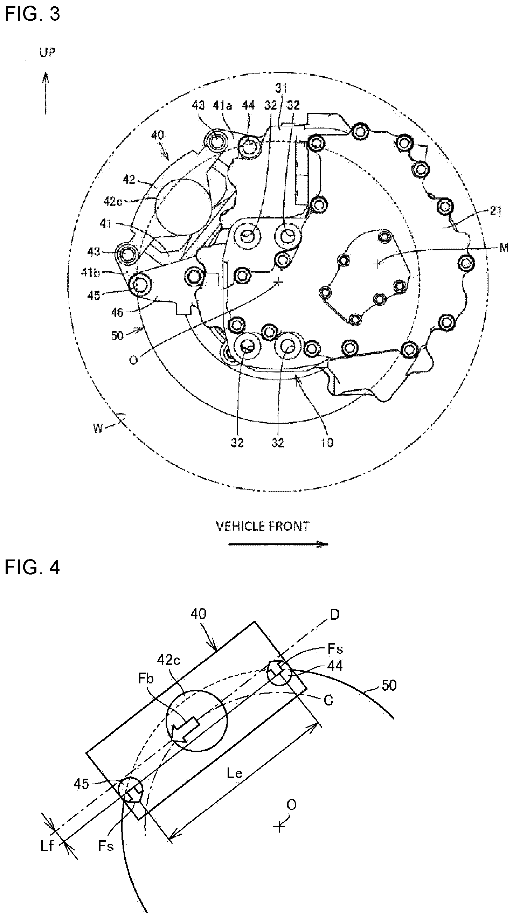

Embodiments of the present invention will be described in detail with reference to the drawings. FIG. 1 is a side view of a coupled structure of an in-wheel motor drive device 10 and a brake caliper 40 according to an embodiment of the present invention as viewed from the outer side (outboard side) in the lateral direction of a vehicle. FIG. 2 is a rear view of the embodiment as viewed from the rear of the vehicle. FIG. 3 is a side view of the embodiment as viewed from the inner side (inboard side) in the lateral direction of the vehicle. The in-wheel motor drive device 10 includes a wheel hub bearing unit 11 provided at the center of a road wheel W, a motor unit 21 for driving the road wheel W, and a speed reduction unit 31 for reducing the speed of rotation of the motor unit 21 to transmit the resultant rotation to the wheel hub bearing unit 11. The motor unit 21 is not disposed coaxially with the wheel hub bearing unit 11 but is offset from the axis O of the wheel hub bearing unit 11.

The axis O extends in the lateral direction of the vehicle and coincides with an axle. Regarding the position in the direction of the axis O, the wheel hub bearing unit 11 is disposed on one side in the direction of the axis O of the in-wheel motor drive device 10 (outer side in the lateral direction of the vehicle, outboard side). The motor unit 21 is disposed on the other side in the direction of the axis O of the in-wheel motor drive device 10 (inner side in the lateral direction of the vehicle, inboard side). The speed reduction unit 31 is disposed on the one side in the direction of the axis O with respect to the motor unit 21. The speed reduction unit 31 overlaps the wheel hub bearing unit 11 in the direction of the axis O.

A tire, not shown, is fitted on the rim of the road wheel W. The road wheel W and the tire form a wheel. The in-wheel motor drive device 10 is disposed in an inner space region of the road wheel W. The wheel hub bearing unit 11 and the speed reduction unit 31 are housed in the inner space region of the road wheel W. The motor unit 21 protrudes from the inner space region of the road wheel W toward the other side in the axial direction (inboard side). In a modification, not shown, the motor unit 21 may be housed in the inner space region of the road wheel W.

The wheel hub bearing unit 11 is a bearing unit with a rotating inner ring and a stationary outer ring, and has an inner ring 12 serving as a rotating ring (hub ring) coupled to the road wheel W, an outer ring, not shown, disposed coaxially around the inner ring 12 and serving as a stationary ring, and a plurality of rolling elements, not shown, arranged in an annular space between the inner ring 12 and the outer ring. The inner ring 12, the outer ring, and the rolling elements are made of bearing steel. For example, the rolling elements are steel balls. The rolling elements are arranged in a plurality of rows at intervals in the direction of the axis O. The wheel hub bearing unit 11 is made of steel such as bearing steel.

The inner ring 12 has a flange 12f at its end on the one side in the direction of the axis O. The flange 12f has through holes 12h for coupling a brake rotor 50 and spokes of the road wheel W. The brake rotor 50 and the road wheel W are attached and fixed to the flange 12f by coupling means such as bolts (not shown). The brake rotor 50 and the road wheel W are disposed coaxially with the inner ring 12 and rotate with the inner ring 12.

The motor unit 21 is a radial gap motor with an inner rotor and an outer stator. However, the motor unit 21 may be other type of electric motor. For example, although not shown in the figures, the motor unit 21 may be an axial gap motor. The motor unit 21 is offset from the axis O in the longitudinal direction of the vehicle. An axis M, which represents a motor rotating shaft, is located forward of the axis O in the longitudinal direction of the vehicle and extends parallel to the axis O. The axis O is located radially outward of the outer stator contained in the motor unit 21.

The speed reduction unit 31 contains an input shaft, not shown, disposed along the axis M, an output shaft, not shown, disposed along the axis O, and a plurality of gears. The speed reduction unit 31 reduces the speed of rotation of the motor unit 21 input from the input shaft, and transmits the resultant rotation from the output shaft to the inner ring 12. The speed reduction unit 31 may contain one or more intermediate shafts. Since the input shaft, the output shaft, and the intermediate shaft(s) of the speed reduction unit 31 extend parallel to each other, the speed reduction unit 31 is a parallel shaft gear speed reducer.

A speed reduction unit casing serving as an outer shell of the speed reduction unit 31 and a motor unit casing serving as an outer shell of the motor unit 21 form a casing serving as an outer shell of the in-wheel motor drive device 10, and are sometimes simply referred to as a casing. This casing is made of aluminum or an aluminum alloy.

When electric power is supplied to the motor unit 21 from the outside of the in-wheel motor drive device 10, the rotor inside the motor unit 21 rotates, and the motor unit 21 outputs the rotation from the motor rotating shaft to the speed reduction unit 31. The speed reduction unit 31 reduces the speed of the rotation input from the motor unit 21 to the input shaft, and outputs the resultant rotation from the output shaft to the wheel hub bearing unit 11. The inner ring 12 of the wheel hub bearing unit 11 rotates at the same rotational speed as the output shaft of the speed reduction unit 31 and drives the road wheel W attached and fixed to the inner ring 12.

As shown in FIG. 3, the casing of the in-wheel motor drive device 10 has through holes 32 for attaching and fixing a carrier member, not shown. The carrier member of the in-wheel motor drive device 10 is attached and fixed by passing coupling means such as bolts through the through holes 32. The carrier member is connected to a suspension system, not shown, such as a strut suspension system, a double wishbone suspension system, or a trailing arm suspension system.

Next, a brake device of the embodiment will be described.

As shown in FIG. 1, the brake rotor 50 is a disc, and the outer peripheral edge of the brake rotor 50 forms a circle whose axis coincides with the axis O. The brake caliper 40 includes a fixed caliper member 41, a movable caliper member 42, and caliper slide pins 43, and is disposed so as to overlap the outer peripheral edge of the disc-shaped brake rotor 50 as viewed in the direction of the axis O. The brake caliper 40 is offset from the axis O. The motor unit 21 is offset from the axis O toward the front of the vehicle, while the brake caliper 40 is offset from the axis O toward the rear of the vehicle. As described above, the motor unit 21 and the brake caliper 40 are offset in different directions with respect to the axis O, and the motor unit 21 and the brake caliper 40 do not overlap each other as viewed in the direction of the axis O. The brake caliper 40 is offset upward from the axis O. The brake caliper 40 is disposed rearward of the speed reduction unit 31 and is attached and fixed to the speed reduction unit casing of the speed reduction unit 31 by an attachment member 44 that will be described later.

The fixed caliper member 41 has ends 41a, 41b at its both ends. The end 41a on the front side and the end 41b on the rear side are separated in the circumferential direction of the brake rotor 50. The end 41a is located above the end 41b. The brake caliper 40 is offset in a direction different from that of the motor unit 21 with respect to the axis O, and most of the brake caliper 40 does not overlap the in-wheel motor drive device 10 as viewed in the direction of the axis O.

The upper end 41a has a threaded hole 41h, and the attachment member 44 (FIG. 3) is screwed into the threaded hole 41h from the inner side in the lateral direction of the vehicle. The attachment member 44 is a bolt and extends through a through hole formed in the casing of the in-wheel motor drive device 10. Similarly, an attachment member 45 is passed through the lower end 41b. The attachment members 44, 45 are located at the same distance from the axis O and extend parallel to the axis O. A bracket 46 stands on the rear end of the casing of the in-wheel motor drive device 10. The bracket 46 has in its rear end a through hole through which the attachment member 45, which is a bolt, extends. A root portion of the bracket 46 is molded integrally with the casing or is attached and fixed to a speed reduction unit bracket of the speed reduction unit 31.

As shown in FIG. 1, the threaded holes 41h, 41h formed at two positions in the fixed caliper member 41 are located in such a manner that a part of each threaded hole 41h, 41h overlaps the outer peripheral edge of the brake rotor 50 as viewed in the direction of the axis O. In other words, the remaining part of each threaded hole 41h, 41h is located radially outward of the brake rotor 50. Similarly, as shown in FIG. 3, the attachment members 44, 45 are also located in such a manner that a part of each attachment member 44, 45 overlaps the outer peripheral edge of the brake rotor 50 and the remaining part of each attachment member 44, 45 is located radially outward of the brake rotor 50, as viewed in the direction of the axis O.

Both ends 41a, 41b of the fixed caliper member 41 support the caliper slide pins 43, 43. The two caliper slide pins 43, 43 form a pair and extend parallel to the axis O. As shown in FIG. 3, the caliper slide pins 43, 43 are located radially outward of the brake rotor 50, as viewed in the direction of the axis O. The attachment members 44, 45 are located outward of the caliper slide pins 43, 43 in the circumferential direction about the axis O. In other words, the caliper slide pins 43, 43 are located between the attachment members 44, 45, and the distance between the attachment members 44, 45 (support span of the brake caliper 40) is larger than that between the caliper slide pins 43, 43.

The movable caliper member 42 is disposed between the ends 41a, 41b and is supported by the pair of caliper slide pins 43, 43. The movable caliper member 42 has a cylinder mechanism 42c housing a piston, not shown, and a pair of friction materials that is arranged so as to face each other and that is pressed by the piston. The movable caliper member 42 is displaceable along the caliper slide pins 43, 43. This displacement is in the thickness direction of the brake rotor 50 (direction of the axis O). The movable caliper member 42 squeezes the brake rotor 50 between the friction materials to slow down or stop the brake rotor 50.

As shown in FIG. 2, the cylinder mechanism 42c overlaps the speed reduction unit 31 in the direction of the axis O. The brake caliper 40 is located on the one side in the direction of the axis O (outer side in the lateral direction of the vehicle) with respect to the speed reduction unit 31, and is held in such an attitude that the brake caliper 40 extends on both sides of the brake rotor 50. That is, the cylinder mechanism 42c is located inward of the brake rotor 50 in the lateral direction of the vehicle.

The brake caliper 40 overlaps the in-wheel motor drive device 10 in the direction of the axis O. The total dimension Ls of the in-wheel motor drive device 10 and the brake caliper 40 in the direction of the axis O with the brake caliper 40 attached and fixed to the in-wheel motor drive device 10 is therefore smaller than the sum of the dimension Lt of the brake caliper 40 in the direction of the axis O and the dimension Lu of the in-wheel motor drive device 10 in the direction of the axis O.

$$[\text{Expression 1}] \qquad \text{Ls} < \text{Lt} + \text{Lu}$$

The brake rotor 50 of the embodiment is disposed on the one side in the direction of the axis O of the in-wheel motor drive device 10. As shown in FIG. 3, the attachment members 44, 45 for attaching and fixing the brake caliper 40 to the in-wheel motor drive device 10 are bolts that are screwed into the threaded holes of the brake caliper 40 by axial tightening from the other side in the direction of the axis O (inner side in the lateral direction of the vehicle). The attachment member 45 is also a bolt and extends through the through hole of the bracket 46 from the other side in the direction of the axis O and is screwed into the threaded hole of the fixed caliper member 41. This makes it possible to attach and detach the brake caliper 40 to and from the in-wheel motor drive device 10 from the inner side in the lateral direction of the vehicle with respect to the in-wheel motor drive device 10.

As shown in FIG. 3, the brake caliper 40 of the embodiment is offset from the axis O so as not to overlap the motor unit 21 as viewed in the direction of the axis O. The brake caliper 40 thus overlaps the in-wheel motor drive device 10 in the direction of the axis O, and the relationship of Expression 1 above is implemented.

The brake caliper 40 is attached and fixed to the casing of the in-wheel motor drive device 10 by the attachment members 44, 45 at two positions separated in the circumferential direction about the axis O.

FIG. 4 schematically illustrates a load acting on the embodiment and corresponds to FIG. 3. In FIG. 4, an arc C about the axis O passes through the center of the cylinder mechanism 42c, and a straight line D is a tangent to the arc C and passes through the pressing center of the cylinder mechanism 42c. When the brake caliper 40 slows down or stops the brake rotor 50 with a braking force Fb, the braking force Fb in the direction of the straight line D acts on the brake caliper 40, and each attachment member 44, 45 is subjected to the braking force Fb in the direction of the straight line D. In addition to the braking force Fb in the direction of the straight line D, a load Fs in a direction perpendicular to the straight line D acts on each attachment member 44, 45. The load Fs is a separate component that does not form a component of the braking force Fb. An extra burden is thus imposed on each attachment members 44, 45. The load Fs is given by Expression 2 using the distance Le from the center of the attachment member 44 to the center of the attachment member 45 and the distance Lf from the center of the attachment member 44 (45) to the straight line D.

$$[\text{Expression 2}] \qquad \text{Fs} = \text{Fb} \times \text{Lf/Le}$$

According to the embodiment, since a part of each attachment member 44, 45 overlaps the outer peripheral edge of the brake rotor 50, the distance Lf is small. Moreover, since the attachment members 44, 45 are separated in the circumferential direction of the brake rotor 50, the distance Le is large. Accordingly, the support span of the brake caliper 40 is larger than in the conventional examples, and the load Fs is smaller than in the conventional examples. This configuration is therefore advantageous in terms of the strength of the portion supporting the brake caliper 40.

Since the attachment members 44, 45 of the embodiment are located outward of the caliper slide pins 43, 43 in the circumferential direction about the axis O, the distance Le between the attachment members 44, 45 is large.

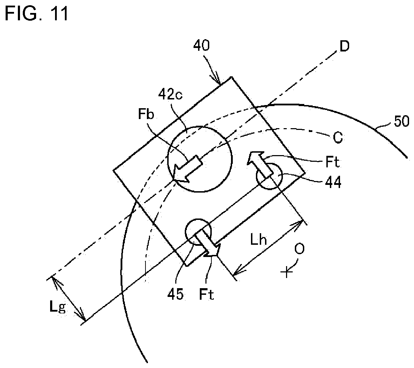

A comparative example shown in FIG. 11 will be described in order to facilitate understanding of the embodiment.

In the comparative example, the entire attachment members 44, 45 are located radially inward of the outer peripheral edge of the brake rotor 50, and the distance Lg from the straight line D to the centers of the attachment members 44, 45 is therefore larger than in the embodiment of FIG. 4 (Lf < Lg). The distance Lh between the centers of the attachment members 44, 45 is smaller than in the embodiment of FIG. 4 (Le > Lh).

A load Ft that acts on the attachment members 44, 45 is given by Expressions 3 and 4.

$$[\text{Expression 3}] \qquad Ft = Fb \times Lg/Lh$$

$$[\text{Expression 4}] \qquad Fs < Ft$$

In the comparative example, the load Ft is larger than the load Fs of the embodiment, and this configuration is disadvantageous in terms of the strength of the portion supporting the brake caliper 40.

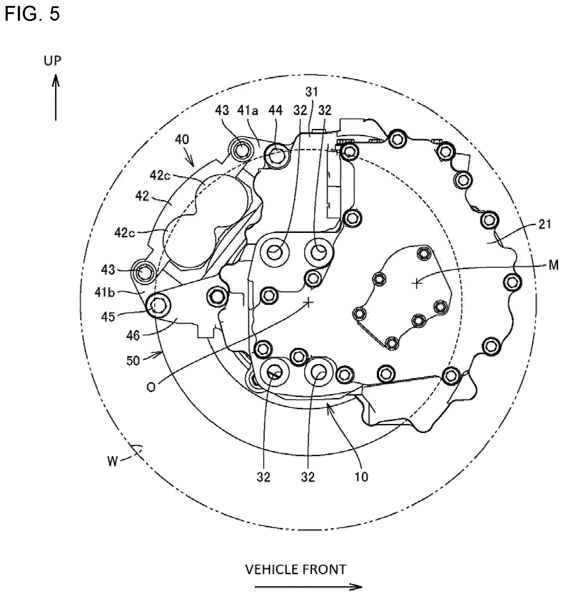

Next, a modification of the present invention will be described. FIG. 5 is a side view of a modification of the present invention as viewed in the direction of the axis O of the wheel hub bearing unit 11 from the inner side in the lateral direction of the vehicle. In the modification, the same configurations as those of the above embodiment are denoted by the same reference signs and description thereof will be omitted. Configurations different from those of the above embodiment will be described. In the modification, the brake caliper 40 includes a double cylinder mechanism composed of a pair of cylinder mechanisms 42c, 42c. Pistons of the cylinder mechanisms 42c, 42c are adjacent to each other in the circumferential direction of the brake rotor 50.

According to the modification shown in FIG. 5, as in the embodiment shown in FIG. 2, the in-wheel motor drive device 10 and the brake caliper 40 can be made to overlap each other in the direction of the axis O, and this configuration restrains an increase in total dimension of the in-wheel motor drive device 10 and the brake caliper 40 in the direction of the axis O. According to the modification shown in FIG. 5, the load Fs that acts on the attachment members 44, 45 can be made small as shown in FIG. 4, which is advantageous in terms of strength.

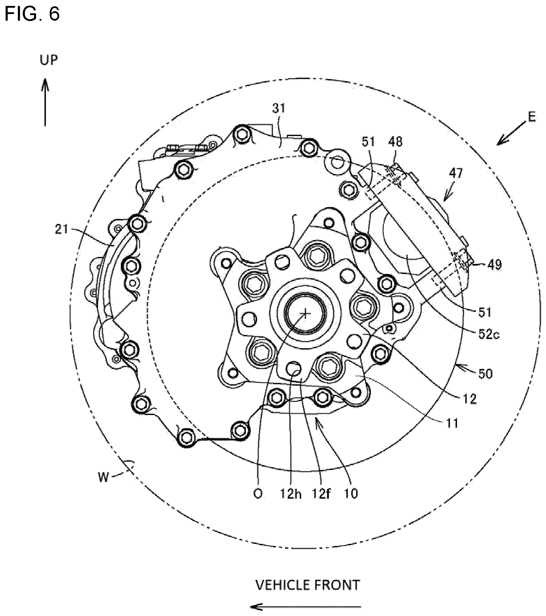

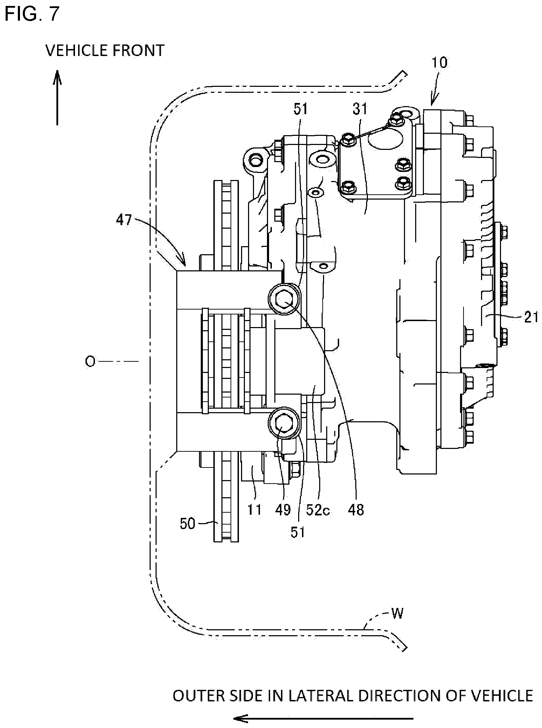

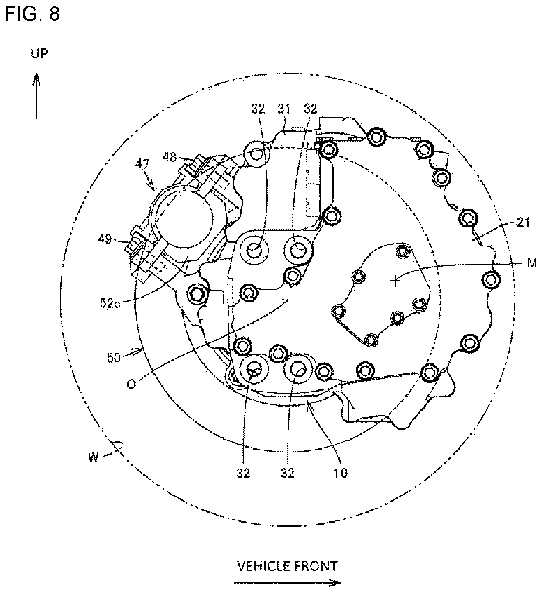

Next, another embodiment of the present invention will be described. FIG. 6 is a side view of another embodiment of the present invention as viewed in the direction of the axis O of the wheel hub bearing unit 11 from the outer side in the lateral direction of the vehicle. FIG. 7 illustrates the another embodiment as viewed in the direction of arrow E in FIG. 6. FIG. 8 is a side view of the another embodiment as viewed in the direction of the axis O of the in-wheel hub bearing unit 11 from the inner side in the lateral direction of the vehicle. In the another embodiment, the same configurations as those of the above embodiment are denoted by the same reference signs and description thereof will be omitted. Configurations different from those of the above embodiment will be described. In the another embodiment, brackets 51 stand at two positions on the casing of the in-wheel motor drive device 10. The brackets 51 are spaced apart in the circumferential direction of the brake rotor 50, extend parallel to each other, and form a pair. A brake caliper 47 is attached and fixed to the tip ends of the brackets 51 by attachment members 48, 49. The attachment members 48, 49 are, e.g., bolts. With heads of the attachment members 48, 49 facing radially outward and shanks thereof facing radially inward, the shanks are screwed respectively into threaded holes formed in the brackets 51. The attachment members 48, 49 are located at the same distance from the axis O.

The brake caliper 47 may be a brake caliper that squeezes both sides of the disc-shaped brake rotor 50 or may be a brake caliper that slidingly contacts one side of the brake rotor 50.

As shown in FIG. 7, the brake caliper 47 is disposed on the one side in the direction of the axis O (outer side in the lateral direction of the vehicle) with respect to the pair of brackets 51. A cylinder mechanism 52c of the brake caliper 47 is disposed on the other side in the direction of the axis O (inner side in the lateral direction of the vehicle) with respect to the brake rotor 50. The cylinder mechanism 52c therefore overlaps the speed reduction unit 31 in the direction of the axis O.

As shown in FIG. 6, the shanks (dashed lines) of the attachment members 48, 49 overlap the outer peripheral edge of the brake rotor 50 but the heads (solid and dashed lines) of the attachment members 48, 49 are located radially outward of the brake rotor 50, as viewed in the direction of the axis O.

According to the another embodiment shown in FIG. 7, as in the embodiment shown in FIG. 2, the in-wheel motor drive device 10 and the brake caliper 47 can be made to overlap each other in the direction of the axis O, and this configuration restrains an increase in total dimension of the in-wheel motor drive device 10 and the brake caliper 47 in the direction of the axis O. According to the another embodiment shown in FIG. 8, the load Fs that acts on the attachment members 44, 45 and the load that acts on the brackets 51 can be made small as shown in FIG. 4, which is advantageous in terms of strength.

Although the embodiments of the present invention are described above with reference to the drawings, the present invention is not limited to the illustrated embodiments. Various modifications and variations can be made to the illustrated embodiments without departing from the spirit and scope of the invention. For example, a part of the configurations of the embodiment and a part of the configurations of the another embodiment may be combined.

Industrial Applicability

The present invention is advantageously used in electrically powered vehicles such as electric vehicles and hybrid vehicles.

Reference Signs List

10: In-Wheel Motor Drive Device, 11: Wheel Hub Bearing Unit, 12: Inner Ring (Hub Ring), 12f: Flange, 21: Motor Unit, 31: Speed Reduction Unit, 40: Brake Caliper, 41: Fixed Caliper Member, 41a, 41b: End of Fixed Caliper Member, 42: Movable Caliper Member, 42c: Cylinder Mechanism, 43: Caliper Slide Pin, 44, 45: Attachment Member, 46: Bracket, 50: Brake Rotor.

**Claims**

1.    A coupled structure of an in-wheel motor drive device and a brake caliper in which the in-wheel motor drive device, a brake rotor, and the brake caliper are coupled together, the in-wheel motor drive device including: a wheel hub bearing unit that includes a hub ring, a stationary ring, and a plurality of rolling elements arranged in annular clearance between the hub ring and the stationary ring and that rotatably supports the hub ring; and a motor unit that is offset from an axis of the hub ring and that is configured to drive the hub ring, the brake rotor being configured to rotate with the hub ring, and the brake caliper being configured to slow down or stop the brake rotor, wherein

the brake rotor is coaxially coupled to the hub ring,
the brake caliper is offset from the axis of the hub ring so as not to overlap the motor unit as viewed in an axial direction of the hub ring and is attached and fixed to a casing serving as an outer shell of the in-wheel motor drive device by attachment members at two positions separated in a circumferential direction about the axis of the hub ring, and
the attachment members are disposed in such a manner that a part of each attachment member overlaps an outer circumferential edge of the brake rotor as viewed in the axial direction of the hub ring.

2.    The coupled structure of the in-wheel motor drive device and the brake caliper according to claim 1, wherein

the brake caliper includes a fixed caliper member attached and fixed to the in-wheel motor drive device by the attachment members, two caliper slide pins supported by the fixed caliper member, and a movable caliper member that is displaceable along the two caliper slide pins and that is configured to slow down or stop the brake rotor, and
the attachment members at the two positions are located circumferentially outward of the two caliper slide pins in the circumferential direction about the axis of the hub ring.

3.    The coupled structure of the in-wheel motor drive device and the brake caliper according to claim 1 or 2, wherein

the in-wheel motor drive device further includes a speed reduction unit configured to reduce a speed of output rotation of the motor unit and transmit the resultant output rotation to the hub ring, and
the brake caliper is attached and fixed to a casing of the speed reduction unit out of the casing by the attachment members.

4.    The coupled structure of the in-wheel motor drive device and the brake caliper according to claim 2, wherein regarding the axis of the hub ring, the brake rotor is disposed on one side in an axial direction of the in-wheel motor drive device, and the attachment members are bolts extending through through holes of the casing from the other side in the axial direction and screwed into the fixed caliper member.

5.    The coupled structure of the in-wheel motor drive device and the brake caliper according to any one of claims 1 to 3, wherein
the attachment members are bolts screwed into threaded holes of the in-wheel motor drive device from an outer side in a radial direction about the axis of the hub ring.

FIG. 1

UP

VEHICLE FRONT

FIG. 2

OUTER SIDE IN LATERAL DIRECTION OF VEHICLE

FIG. 3

UP

VEHICLE FRONT

FIG. 4

FIG. 5

UP

VEHICLE FRONT

FIG. 6

UP

VEHICLE FRONT

FIG. 7

VEHICLE FRONT

10

51    31

47

O

21

50    11  49 | 52c  48
         51

W

OUTER SIDE IN LATERAL DIRECTION OF VEHICLE

FIG. 8

UP

32 31 32

47 48

49

52c

50

O

21

M

W

32 32 10

VEHICLE FRONT

FIG. 9

FIG. 10

FIG. 11

## INTERNATIONAL SEARCH REPORT

| | International application No. |
|---|---|
| | PCT/JP2019/041923 |

**A. CLASSIFICATION OF SUBJECT MATTER**
Int.Cl. B60K7/00(2006.01)i, F16D55/224(2006.01)i, F16D65/02(2006.01)i

According to International Patent Classification (IPC) or to both national classification and IPC

**B. FIELDS SEARCHED**

Minimum documentation searched (classification system followed by classification symbols)
Int.Cl. B60K7/00, F16D55/224, F16D65/02

Documentation searched other than minimum documentation to the extent that such documents are included in the fields searched
Published examined utility model applications of Japan     1922–1996
Published unexamined utility model applications of Japan   1971–2019
Registered utility model specifications of Japan           1996–2019
Published registered utility model applications of Japan   1994–2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | US 2011/0132673 A1 (HYUNDAI MOTOR COMPANY) 09 June 2011, paragraphs [0031]–[0044], fig. 2–10<br>& KR 10-2011-0062337 A | 1<br>2–5 |
| Y | JP 2012-31978 A (NISSAN MOTOR CO., LTD.) 16 February 2012, paragraphs [0020], [0024], fig. 1–4 (Family: none) | 2, 4 |

☒ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>13.12.2019 | Date of mailing of the international search report<br>24.12.2019 |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

| International application No. |
| --- |
| PCT/JP2019/041923 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2012-214202 A (AISIN AW CO., LTD.) 08 November 2012, paragraphs [0032], [0061], fig. 1-5 & US 2012/0248850 A1, paragraphs [0043], [0072], fig. 1-5 & WO 2012/132721 A1 & DE 112012000367 B & CN 103298639 A | 3 |
| Y | JP 2015-54659 A (NTN CORPORATION) 23 March 2015, paragraphs [0038], [0041], fig. 3-7 & US 2016/0214474 A1, paragraphs [0059], [0062], fig. 3-7 & WO 2015/037703 A1 & EP 3045336 A1 & CN 105473367 A | 5 |
| A | US 2014/0015382 A1 (HYUNDAI MOBIS CO., LTD.) 16 January 2014, paragraphs [0045]-[0116], fig. 1-11 & KR 10-2014-0015704 A & CN 103545976 A | 1-5 |
| A | JP 2018-43574 A (NTN CORPORATION) 22 March 2018, paragraphs [0015]-[0069], fig. 1-6 (Family: none) | 1-5 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008184110 A

- JP 2012025291 A